# EUROPÄISCHE PATENTSCHRIFT

(11) **EP 0 847 888 B1**
(45) Veröffentlichungstag und Bekanntmachung des Hinweises auf die Patenterteilung: **05.01.2000**
(21) Anmeldenummer: 97116205.2
(22) Anmeldetag: 18.09.1997
(51) Int. Cl.: B60K 15/077, F02M 37/02, F04F 5/12

(54) **Kraftstoffbehälter**
Fuel tank
Réservoir de carburant

(30) Priorität: 12.12.1996 DE 19651652
(43) Veröffentlichungstag der Anmeldung: 17.06.1998
(73) Patentinhaber: ROBERT BOSCH GMBH, 70442 Stuttgart (DE)
(72) Erfinder: Frank, Kurt, 73614 Schorndorf (DE); Ballier, Guenter-Paul, 717739 Oberriexingen (DE); Fischerkeller, Rolf, 74399 Walheim (DE); Jauch, Gerhard, 71706 Markgroeningen (DE)

(56) Entgegenhaltungen:
- DE-A- 3 732 415
- DE-A- 4 301 762
- DE-A- 19 504 217
- DE-C- 855 656
- DE-C- 3 915 185
- DE-U- 9 116 297

## Beschreibung

### Stand der Technik

Die Erfindung betrifft einen Kraftstoffbehälter für Kraftfahrzeuge der im Oberbegriff des Anspruchs 1 definierten Gattung.

Ein bekannter Kraftstoffbehälter dieser Art (DE 39 15 185 C1) ist sattelförmig ausgebildet, wobei die beiden Satteltaschen die beiden Bevorratungskammern bilden, in deren einer die Entnahmekammer für den Kraftstoff, auch Staugefäße genannt, angeordnet ist. Die Umpumpvorrichtung weist zwei, jeweils eine Düse und ein Saug- oder Mischrohr umfassende Strahlpumpen auf, die parallel oder hintereinander im Rücklaufstrom des Kraftstoffs oder in einem vom Förderstrom der Kraftstoffpumpe direkt abgezweigten Teilförderstrom angeordnet sind. Jeweils eine Saugstrahlpumpe ist in einer Bevorratungskammer in Bodennähe angeordnet, wobei das koaxial zur Düsenachse angeordnete Saugrohr mit einem koaxialen Ansaugtrichter den Endbereich der Düse übergreift. Die Saugrohrausgange der beiden Strahlpumpen sind an je einem von zwei Leitungsrohren angeschlossen, die in der Entnahmekammer münden.

### Vorteile der Erfindung

Der erfindungsgemäße Kraftstoffbehälter mit den kennzeichnenden Merkmalen des Anspruchs 1 hat den Vorteil, daß die Umpunpvorrichtung zur Sicherstellung einer gleichbleibenden Füllung der Entnahmekammer wesentlich kostengünstiger herstellbar ist und einen geringeren Energiebedarf benötigt, da nur noch eine Düse mit einer Kraftstofftreibmenge versorgt werden muß und somit die Kraftstoffpumpe weniger zusätzlichen Kraftstoff für die Umpumpvorrichtung fördern muß, ihre Förderleistung also gesenkt werden kann. Je nach Ausgestaltung der Saug- oder Mischrohre können dabei die Bevorratungskammern nahezu gleichmäßig oder nacheinander vollständig entleert werden. Im letzten Fall wird die dem vorderen Saugrohr zugeordnete Kammer zuerst entleert, wobei nach vollständigem Entleeren dieser Kammer das vordere Saugrohr durch den Düsenstrahl überbrückt wird und nur noch das zweite Saugrohr im Einsatz ist.

Durch die in den weiteren Ansprüchen aufgeführten Maßnahmen sind vorteilhafte Weiterbildungen und Verbesserungen des im Anspruch 1 angegebenen Kraftstoffbehälters möglich.

Gemäß einer bevorzugten Ausführungsform der Erfindung sind die Kammern im Kraftstoffbehälter ausgehend vom Boden des Behälters durch voneinander beabstandete Trennwände getrennt, und jeweils eines der miteinander fluchtenden Saugrohre ist durch eine der beiden Trennwände zwischen den drei Kammern hindurchgeführt. Hierdurch wird der konstruktive und fertigungstechnische Aufwand für die Umpumpvorrichtung extrem niedrig gehalten, da die Saugrohre selbst die Verbindung zwischen den einzelnen Kammern herstellen und auf zusätzliche Verbindungsrohre verzichtet werden kann.

Gemäß einer vorteilhaften Ausführungsform der Erfindung sind die Saugeingänge der Saugrohre konzentrisch zur Rohrachse ausgebildet, so daß sich eine fertigungstechnisch günstige rotationssymmetrische Geometrie der Saugrohre ergibt. Wenn dabei das vordere Saugrohr mit Axialabstand vom Ausgang der Düse und das hintere Saugrohr mit Axialabstand vom Ende des vorderen Saugrohrs angeordnet ist, dann wird durch die Umpumpvorrichtung Kraftstoff aus der vorderen Bevorratungskammer, in welcher die Düse angeordnet ist, hauptsächlich in die hintere Bevorratungskammer gepumpt, während die Füllung der an die hintere Bevorratungskammer sich anschließenden Entnahmekammer überwiegend durch Niveauausgleich durch das hintere Saugrohr hindurch erfolgt. Ist die vordere Bevorratungskammer entleert, so wird das erste Saugrohr durch den Freistrahl der Düse komplett überbrückt und über das hintere Saugrohr wird jetzt die hintere Belüftungskammer durch Umpumpen von Kraftstoff in die Entnahmekammer entleert.

Gemäß einer alternativen Ausführungsform der Erfindung ist das vordere Saugrohr mit Axialabstand vom Ausgang der Düse angeordnet und das hintere Saugrohr übergreift das Ende des vorderen Saugrohrs unter Belassung einer Öffnung. Hierzu kann entweder der Durchmesser des hinteren Saugrohrs größer bemessen werden als der des vorderen Saugrohrs oder das vordere Ende des hinteren Saugrohrs mit einem Öffnungstrichter versehen werden. Bei dieser Ausbildung der Umpumpvorrichtung werden die beiden hintereinander angeordneten Bevorratungskammern nahezu gleichmäßig in die Entnahmekammer entleert, wobei die vordere Bevorratungskammer, in welcher die Düse angeordnet ist, einen geringen Entleerungsvorlauf hat.

Bei Ausbildung des Kraftstoffbehälters als Satteltank, dessen wenigstens zwei durch einen Überbrückungsraum miteinander verbundene Satteltaschen die beiden Bevorratungskammern bilden, wird gemäß einer vorteilhaften Ausführungsform der Erfindung die Umpumpvorrichtung in der Satteltasche angeordnet, in welcher die Entnahmkammer plaziert ist. Das vordere Saugrohr ist spaltlos mit der Düse verbunden und mit seinem Saugeingang dessen Achse unter einem spitzen Winkel zur Saugrohrachse verläuft, an einer Ansaugleitung angeschlossen, die in Bodennähe der anderen Satteltasche mündet. Der Saugeingang des hinteren Saugrohrs ist wieder konzentrisch zur Rohrachse ausgebildet, und das Saugrohr ist durch die die Entnahmekammer von der Bevorratungskammer trennende Trennwand hindurchgeführt. Je nachdem, ob das hintere Saugrohr mit Axialabstand zum Ende des vorderen Saugrohrs angeordnet ist oder dieses unter Belassung einer den Saugeingang bildenden Öffnung übergreift, wird eine aufeinanderfolgende oder nahezu gleichzeitige Entleerung der beiden Entlüftungskammern erreicht.

### Zeichnung

Die Erfindung ist anhand von in der Zeichnung dargestellten Ausführungsbeispielen in der nachfolgenden Beschreibung näher erläutert. Es zeigen jeweils in schematischer Darstellung:
- Fig. 1: einen Längsschnitt eines Kraftstoffbehälters mit einer Umpumpvorrichtung,
- Fig. 2: eine gleiche Darstellung des Behälters mit einer modifizierten Umpumpvorrichtung,
- Fig. 3: einen Längsschnitt eines als sog. Satteltank ausgebildeten Kraftstoffbehälters.

### Beschreibung der Ausführungsbeispiele

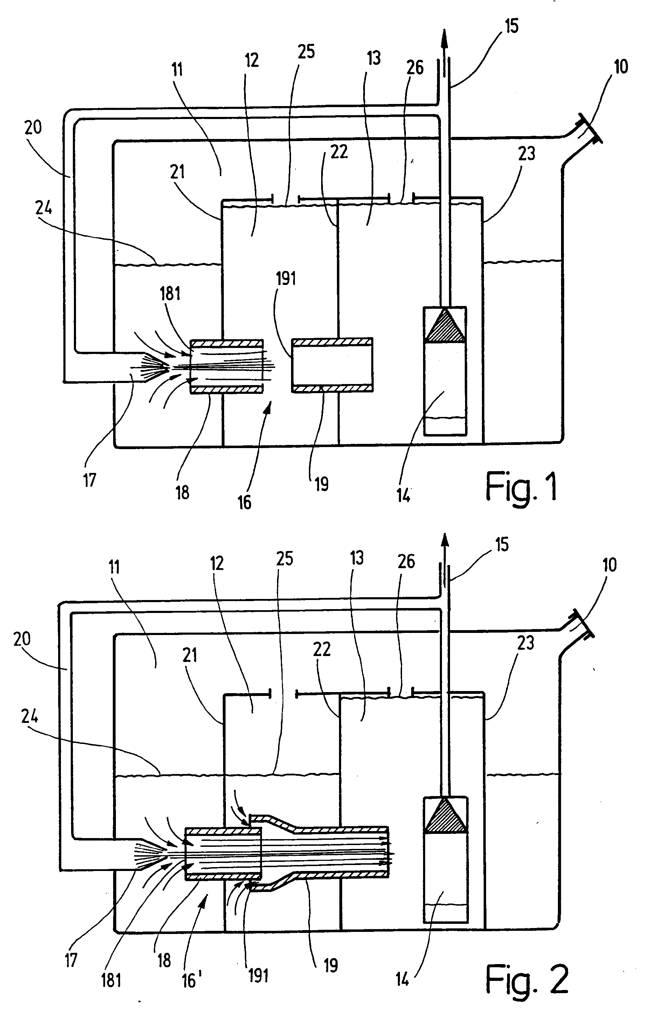

Der in Fig. 1 schematisch im Schnitt dargestellte geschlossene Kraftstoffbehälter weist einen Kraftstoff-Einfüllstutzen 10 auf und ist im Innern in zwei Bevorratungskammern 11,12 und einer Kraftstoff-Entnahmekammer 13, auch Staugefäß genannt, unterteilt. Die Kammern 11 - 13 sind durch Trennwände 14,15,16 voneinander abgetrennt, die vom Boden des Kraftstoffbehälters ausgehen und sich im Kraftstoffbehälter quer von der einen Seitenwand zur anderen Seitenwand erstrecken. Sie enden mit Abstand von der Oberseite des Kraftstoffbehälters, so daß zwischen den Kammern 11 - 13 ein Überlauf vorhanden ist und beim Einfüllen von Kraftstoff in den Kraftstoffbehälter alle Kammern 11 - 13 mit Kraftstoff aufgefüllt werden. Im Ausführungsbeispiel der Fig. 1 sind die eine Bevorratungskammer 12 und die Entnahmekammer 13 auf ihrer Oberseite verschlossen und nur mit einer kleineren Einlauföffnung versehen, während der Einfüllstutzen 10 in der Bevorratungskammer 11 mündet. In der Entnahmekammer 13 ist eine Kraftstoffpumpe 14 angeordnet, die Kraftstoff aus der Entnahmekammer 13 über eine Förderleitung 15 zur Brennkraftmaschine fördert. Um sicherzustellen, daß auch bei Abnehmen des Kraftstoffvorrats im Kraftstoffbehälter die Kraftstoffpumpe 14 immer im Kraftstoff eingetaucht bleibt, ist im Kraftstoffbehälter eine Umpumpvorrichtung 16 vorgesehen, die durch Umpumpen von Kraftstoff aus den beiden Bevorratungskammern 11,12 in die Entnahmekammer 13 dafür sorgt, daß die Entnahmekammern 13 auch bei abnehmenden Kraftstoffvorrat immer vollständig mit Kraftstoff gefüllt ist.

Die Umpumpvorrichtung 16 arbeitet nach dem Saugstrahlprinzip und umfaßt eine Düse 17 und zwei Saugrohre 18,19, die mit fluchtenden Rohrachsen hintereinander im Düsenstrahl angeordnet sind. Zur Erzeugung des Düsenstrahls ist die Düse 17 an eine von der Förderleitung 15 abzweigende Kraftstoffleitung 20 angeschlossen, so daß ein Teilstrom des von der Kraftstoffpumpe 14 geförderten Kraftstoffs zur Düse 17 hin gefördert wird und über die Düse 17 als Düsenstrahl durch die beiden Saugrohre 18,19 hindurchtritt, wobei in bekannter Weise an den Saugeingängen der Saugrohre 18,19 ein Unter- oder Saugdruck erzeugt wird. Alternativ kann die Düse 17 auch an die Kraftstoffrücklaufleitung angeschlossen sein, die in bekannter Weise überschüssigen Kraftstoff von der Brennkraftmaschine wieder in den Kraftstoffbehälter zurückführt. In diesem Fall würde die Kraftstoffleitung 20 entfallen. In dem Ausführungsbeispiel der Fig. 1 sind die Saugrohre 18,19 als zylinderförmige Rohrstutzen ausgebildet, deren Durchmesser gleich oder unterschiedlich bemessen sein kann. Jeweils ein Saugrohr 18 bzw. 19 durchstößt die Trennwände 21,22, die die Kammern 11 - 13 gegeneinander abschotten, so daß das Saugrohr 18, das durch die Trennwand 21 hindurchtritt, die erste Bevorratungskammer 11 mit der zweiten Bevorratungskammer 12 und das Saugrohr 19, das durch die Trennwand 22 hindurchtritt, die zweite Bevorratungskammer 12 mit der Entnahmekammer 13 verbindet. Die Düse 17 ist dem Saugrohr 18 vorgeordnet und liegt damit in der ersten Bevorratungskammer 11. Das der Düse 17 naheliegende vordere Saugrohr 18 hält einen Axialabstand zur Düse 17 und das hintere Saugrohr 19 einen Axialabstand zum vorderen Saugrohr 18 ein. Die Saugeingänge 181 und 191 der Saugrohre 18,19 liegen damit koaxial zu den Rohrachsen.

Bei Kraftstofförderung der Kraftstoffpumpe 14 saugt der aus der Düse 17 austretende Kraftstoffstrahl, auch Düsenstrahl genannt, Kraftstoff aus der ersten Bevorratungskammer 11 an und fördert diesen in die zweite Bevorratungskammer 12, wie dies in Fig. 1 durch Stömungspfeile angedeutet ist. Der von der Kraftstoffpumpe 14 aus der Entnahmekammer 13 entnommene Kraftstoff wird aus der zweiten Bevorratungskammer 12 nachgefüllt, da über das hintere Saugrohr 19 ein Niveauausgleich erfolgt. Bei sinkendem Kraftstoffspiegel in der ersten Bevorratungskammer 11, der mit 24 gekennzeichnet ist, bleibt die zweite Bevorratungskammer 12 weitgehend gefüllt, da über das vordere Saugrohr 18 der in die Entnahmekammer 13 abströmende Kraftstoff stets aus der ersten Bevorratungskammer 11 nachgefördert wird. Der Kraftstoffspiegel in der zweiten Bevorratungskammer 12 ist mit 25 und in der Entnahmekammer 13 mit 26 bezeichnet. Ist die erste Bevorratungskammer 11 komplett entleert, so wird das vordere Saugrohr 18 durch den Düsenstrahl 17 vollständig überbrückt und der Düsenstrahl aktiviert das zweite Saugrohr 19, über das nunmehr Kraftstoff aus der zweiten Bevorratungskammer 12 in die Entnahmekammer 13 gefördert wird. Bei sinkendem Kraftstoffspiegel 25 in der zweiten Bevorratungskammer 12 bleibt der Kraftstoffspiegel 26 in der Entnahmekammer 13 zunächst unverändert, bis die zweite Bevorratungskammer 12 entleert ist.

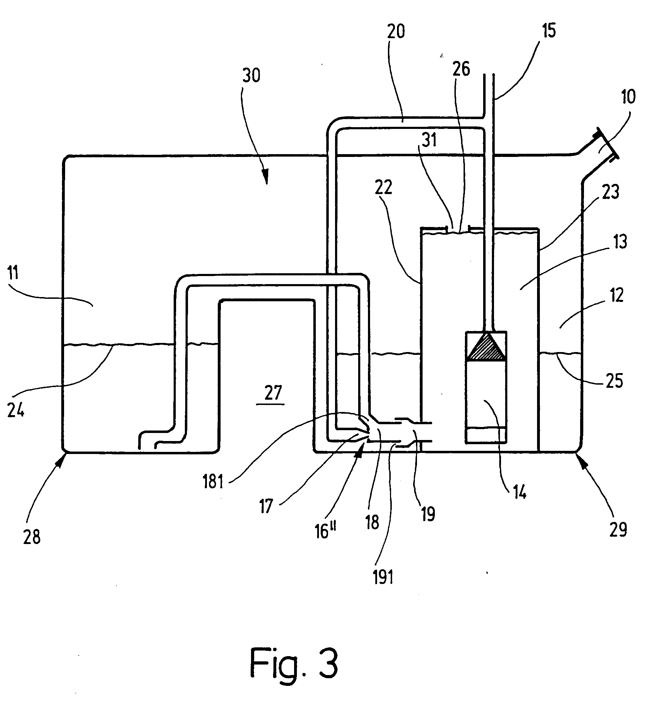

Bei dem in Fig. 2 schematisch im Schnitt dargestellten Kraftstoffbehälter ist lediglich die Umpumpvorrichtung 16' bezüglich der Anordnung der beiden Saugrohre 18,19 modifiziert und ansonsten unverändert, so daß gleiche Bauteile mit gleichen Bezugszeichen versehen sind. Bei der modifizierten Umpumpvorrichtung 16' besitzen die beiden Saugrohre 18,19 wiederum konzentrisch angeordnete Saugeingänge 181,191, und der Saugeingang 181 des vorderen Saugrohrs 18 hält wie bei der Umpumpvorrichtung 16 in Fig. 1 einen axialen Abstand von der Düse 17 ein. Das hintere Saugrohr 18 übergreift das ihm zugekehrte Ende des vorderen Saugrohrs 18 unter Belassung einer Öffnung in Form eines Ringspalts,so daß der Saugeingang 191 des hinteren Saugrohrs 19 von der zwischen dem vorderen und hinteren Saugrohr 18,19 verbleibenden Ringfläche gebildet wird. Zum Übergreifen des vorderen Saugrohrs 18 ist das hintere Saugrohr 19 trichterförmig aufgeweitet. Alternativ kann aber das hintere Saugrohr 19 einen entsprechenden größeren Durchmesser als das vordere Saugrohr 18 aufweisen, so daß es problemlos über das vordere Saugrohr 18 geschoben werden kann. Fördert die Kraftstoffpumpe 14 Kraftstoff aus der Entnahmekammer 13, so saugt der in der Düse 17 entstehende Düsenstrahl Kraftstoff sowohl aus der ersten Bevorratungskammer 11 als auch aus der zweiten Bevorratungskammer 12 an und fördert diesen direkt in die Entnahmekammer 13. Die Kraftstoffspiegel 24 und 25 in den beiden Bevorratungskammern 11,12 sinken nahezu in gleicher Weise, wobei die erste Bevorratungskammer 11 ein kleineren Vorlauf beim Entleeren erfährt. Ist die erste Bevorratungskammer 11 vollständig entleert, so überbrückt der Düsenstrahl wieder das vordere Saugrohr 18, und die Entnahmekammer 13 wird aus der zweiten Bevorratungskammer 12 gefüllt, bis diese ebenfalls entleert ist.

Der in Fig. 3 schematisch skizzierte Kraftstoffbehälter ist als sog. Satteltank ausgeführt, und derart konzipiert, daß er beispielsweise unter einem Fondsitz eines Personenkraftwagens installiert werden kann. Zu diesem Zweck bildet beispielsweise der mittlere Bereich einen Tunnel 27 zum Hindurchführen einer Gelenkwelle für einen Hinterachsenantrieb. Dieser Tunnel 27 teilt den Kraftstoffbehälter in zwei Satteltaschen 28,29, die jeweils eine der beiden Bevorratungskammern 11,12 bilden. Die beiden Satteltaschen 28,29 sind durch einen Überbrückungsraum 30 miteinander verbunden. Die Entnahmekammer 13 ist in der Satteltasche 29 angeordnet und von der zweiten Bevorratungskammer 12 durch die Trennwände 22 und 23 abgetrennt. Die Trennwände 22,23 erstrecken sich wieder vom Boden der Satteltasche 28 bis zu dem Überbrückungsraum 30 und führen seitlich bis an die Seitenwände der Satteltasche 29. Die oben geschlossene Entnahmekammer 13 hat über eine Öffnung 31 eine Verbindung zum Überbrückungsraum 30, so daß sie bei nahezu vollständig gefülltem Kraftstoffbehälter über die Öffnung 31 ebenfalls mit Kraftstoff befüllt wird. Die nach dem Strahlprinzip arbeitende Umpumpvorrichtung 16'' ist in der zweiten Bevorratungskammer 12 angeordnet, wobei ihre Düse 17 wiederum an die von der Förderleitung 15 abgezweigte Kraftstoffleitung 20 angeschlossen ist.Das von der Düse 17 abgekehrte hintere Saugrohr 19 durchstößt die Trennwand 22 zur Entnahmekammer 13 und übergreift unter Belassung einer Öffnung in Form eines Ringspalts, der den konzentrischen Saugeingang 191 des hinteren Saugrohrs 19 bildet, das Rohrende des koaxial davor angeordneten, vorderen Saugrohrs 18. Das vordere Saugrohr 18 ist spaltlos mit der Düse 17 verbunden. Sein im Rohrmantel ausgebildeter Saugeingang 181 ist bezüglich seiner Achse unter einem spitzen Winkel zur Saugrohrachse geneigt und mit einer Ansaugleitung 32 verbunden, die über den Tunnel 27 hinweg durch den Überbrückungsraum 30 bis in die Satteltasche 28 geführt ist und dort in Bodennähe mündet.

Beim Fördern von Kraftstoff durch die Kraftstoffpumpe 14 saugt der durch die beiden Saugrohre 18,19 hindurchtretende Düsenstrahl über das mit der Ansaugleitung 32 verbundene Saugrohr 18 Kraftstoff aus der ersten Bevorratungskammer 11 und über das Saugrohr 19 Kraftstoff aus der zweiten Bevorratungskammer 12 an und fördert diesen in die Entnahmekammer 13, so daß deren Kraftstoffspiegel 26 bei annähernd gleich sinkenden Kraftstoffspiegeln 24 und 25 in den beiden Bevorratungskammern 11,12 sein oberes Niveau beibehält. Wie bei der Umpumpvorrichtung 16' in Fig. 2 werden die beiden Bevorratungskammern 11,12 in erster Näherung gleichzeitig mit etwas Vorlauf der ersten Bevorratungskammer 11 entleert.

Bei der Umpumpvorrichtung 16'' kann das hintere Saugrohr 19 auch wie das entsprechende Saugrohr 19 in der Umpumpvorrichtung 16 in Fig. 1 ausgebildet, also mit Axialabstand vom vorderen Saugrohr 18 angeordnet werden. Bei dieser Abwandlung der Umpumpvorrichtung 16'' wird dann - wie zu Fig. 1 beschrieben - Kraftstoff aus der ersten Bevorratungskammer 11 in die zweite Bevorratungskammer 12 und von der zweiten Bevorratungskammer 12 in die Entnahmekammer 13 umgepumpt.

## Patentansprüche

1. Kraftstoffbehälter für Kraftfahrzeuge mit wenigstens zwei Bevorratungskammern (11,12) und einer Entnahmekammer (13), aus der mittels einer Kraftstoffpumpe (14) Kraftstoff förderbar ist, und mit einer nach dem Saugstrahlprinzip arbeitenden Umpumpvorrichtung (16;16'; 16'') zum Umpumpen von Kraftstoff aus den wenigstens zwei Bevorratungskammern (11,12) in die Entnahmekammer (13), dadurch gekennzeichnet, daß die Umpumpvorrichtung (16;16';16'') eine einzige, von mindestens einem Teil des Förderstroms der Kraftstoffpumpe (14) durchströmte Düse (17) und wenigstens zwei im Düsenstrahl hintereinander fluchtend angeordnete Saugrohre (18,19) aufweist, deren Saugeingänge (181,191) mit je einer Bevorratungskammer (11,12) in Verbindung stehen, und daß der Ausgang des von der Düse (17) abgekehrten letzten Saugrohrs (19) mit der Entnahmekammer (13) verbunden ist.

2. Kraftstoffbehälter nach Anspruch 1, dadurch gekennzeichnet, daß die Kammern (11-13) durch voneinander beabstandete Trennwände (21-23) getrennt sind und daß jeweils eines der miteinander fluchtenden Saugrohre (18,19) durch eine Trennwand (21,22) hindurchgeführt ist.

3. Kraftstoffbehälter nach Anspruch 2, dadurch gekennzeichnet, daß die Saugeingänge (181,191) der Saugrohre (18,19) konzentrisch zur Rohrachse ausgebildet sind und die Rohrachsen mit der Düsenachse fluchten.

4. Kraftstoffbehälter nach Anspruch 3, dadurch gekennzeichnet, daß das der Düse (17) naheliegende vordere Saugrohr (18) mit Axialabstand vom Ausgang der Düse (17) angeordnet ist.

5. Kraftstoffbehälter nach Anspruch 3, dadurch gekennzeichnet, daß das hintere Saugrohr (19) mit Axialahstand vom Ende des vorderen Saugrohrs (18) angeordnet ist.

6. Kraftstoffbehälter nach Anspruch 4, dadurch gekennzeichnet, daß das hintere Saugrohr (19) das Ende des vorderen Saugrohrs (18) unter Belassung einer den Saugeingang (191) des hinteren Saugrohrs (19) bildenden Öffnung übergreift.

7. Kraftstoffbehälter nach Anspruch 1, dadurch gekennzeichnet, daß er in Sattelform mit wenigstens zwei durch einen Überbrückungsraum (30) miteinander verbundenen Satteltaschen (28,29) ausgebildet ist, die die beiden Bevorratungskammern (11,12) bilden, wobei die Entnahmekammer (13) in einer der Satteltaschen (29) angeordnet ist, daß die Umpumpvorrichtung (16'') in der die Entnahmekammer (13) enthaltenden Satteltasche (29) angeordnet ist und daß das der Düse (17) zugekehrte vordere Saugrohr (19) spaltlos mit der Düse (17) verbunden und mit seinem Saugeingang (191) an einer in Bodennähe der anderen Satteltasche (28) mündenden Ansaugleitung (32) angeschlossen ist.

8. Kraftstoffbehälter nach Anspruch 7, dadurch gekennzeichnet, daß der Saugeingang (191) des hinteren Saugrohrs (19) konzentrisch zur Rohrachse (19) ausgebildet ist.

9. Kraftstoffbehälter nach Anspruch 7, dadurch gekennzeichnet, daß das hintere Saugrohr (19) im Axialabstand zum vorderen Saugrohr (18) oder dieses endseitig unter Belassung einer den Saugeingang (191) des hinteren Saugrohrs (19) bildenden Öffnung übergreifend angeordnet ist.

10. Kraftstoffbehälter nach einem der Ansprüche 7 - 9, dadurch gekennzeichnet, daß das hintere Saugrohr (19) durch eine die Entnahmekammer (13) von der sie umgebenden Bevorratungskammer (12) trennende Trennwand (22) hindurchgeführt ist.

## Claims

1. Fuel tank for motor vehicles, with at least two storage chambers (11, 12) and an extraction chamber (13), out of which fuel can be conveyed by means of a fuel pump (14), and with a transfer-pumping device (16; 16'; 16''), operating on the suction-jet principle, for the transfer-pumping of fuel out of the at least two storage chambers (11, 12) into the extraction chamber (13), characterized in that the transfer-pumping device (16; 16'; 16'') has a single nozzle (17), through which at least part of the feed stream of the fuel pump (14) flows, and at least two suction pipes (18, 19) which are arranged in alignment one behind the other in the nozzle jet and the suction inlets (181, 191) of which are connected in each case to a storage chamber (11, 12), and in that the outlet of the last suction pipe (19) facing away from the nozzle (17) is connected to the extraction chamber (13).

2. Fuel tank according to Claim 1, characterized in that the chambers (11-13) are separated by partitions (21-23) spaced from one another, and in that, in each case, one of the suction pipes (18, 19) in alignment with one another is led through a partition (21, 22).

3. Fuel tank according to Claim 2, characterized in that the suction inlets (181, 191) of the suction pipes (18, 19) are arranged concentrically to the pipe axis, and the pipe axis are in alignment with the nozzle axis.

4. Fuel tank according to Claim 3, characterized in that the front suction pipe (18) located near the nozzle (17) is arranged at an axial distance from the outlet of the nozzle (17).

5. Fuel tank according to Claim 3, characterized in that the rear suction pipe (19) is arranged at an axial distance from the end of the front suction pipe (18).

6. Fuel tank according to Claim 4, characterized in that the rear suction pipe (19) engages over the end of the front suction pipe (18) so as to leave an orifice forming the suction inlet (191) of the rear suction pipe (19).

7. Fuel tank according to Claim 1, characterized in that it is designed in the form of a saddle with at least two saddle pockets (28, 29) which are connected to one another by means of a bridging space (30) and which form the two storage chambers (11, 12), the extraction chamber (13) being arranged in one of the saddle pockets (29), in that the transfer-pumping device (16'') is arranged in the saddle pocket (29) containing the extraction chamber (13), and in that the front suction pipe (19) facing the nozzle (17) is connected to the nozzle (17) without a gap and has its suction inlet (191) connected to an intake conduit (32) opening out near the bottom of the other saddle pocket (28).

8. Fuel tank according to Claim 7, characterized in that the suction inlet (191) of the rear suction pipe (19) is designed concentrically to the pipe axis (19).

9. Fuel tank according to Claim 7, characterized in that the rear suction pipe (19) is arranged at an axial distance from the front suction pipe (18) or so as to engage over the latter on the end face, leaving an orifice forming the suction inlet (191) of the rear suction pipe (19).

10. Fuel tank according to one of Claims 7-9, characterized in that the rear suction pipe (19) is led through a partition (22) separating the extraction chamber (13) from the storage chamber (12) surrounding the said extraction chamber.

## Revendications

1. Réservoir de carburant pour véhicule automobile, comportant au moins deux chambres de réserve (11, 12) et une chambre de prélèvement (13) d'où le carburant est prélevé par une pompe (14), ainsi qu'un dispositif de pompage de circulation (16, 16', 16'') fonctionnant selon le principe du jet aspirant pour pomper le carburant par circulation au moins des deux chambres de réserve (11, 12) dans la chambre de prélèvement (13),
caractérisé en ce que
• le dispositif de pompage de circulation (16, 16', 16'') comprend une seule buse (17) traversée par au moins une partie du débit de la pompe de carburant (14), et au moins deux tubes d'aspiration (18, 19) alignés l'un derrière l'autre dans le jet de la buse et dont les entrées d'aspiration (181, 191) communiquent chacune avec une chambre de réserve (11, 12) et,
• la sortie du dernier tube d'aspiration (19), sortie non tournée vers la buse (17), est reliée à la chambre de prélèvement (13).

2. Réservoir de carburant selon la revendication 1,
caractérisé en ce que
les chambres (11-13) sont séparées par des cloisons (21-23) distantes l'une de l'autre et chaque fois, l'un des tubes d'aspiration (18, 19) alignés, traverse une cloison (21, 22).

3. Réservoir de carburant selon la revendication 2,
caractérisé en ce que
les entrées d'aspiration (181, 191) des tubes d'aspiration (18, 19) sont concentriques à l'axe du tube et les axes des tubes sont alignés sur l'axe de la buse.

4. Réservoir de carburant selon la revendication 3,
caractérisé en ce que
le tube d'aspiration avant (18) au voisinage de la buse (17) est distant axialement de la sortie de la buse (17).

5. Réservoir de carburant selon la revendication 3,
caractérisé en ce que
le tube d'aspiration arrière (19) est à une certaine distance axiale de l'extrémité du tube d'aspiration avant (18).

6. Réservoir de carburant selon la revendication 4,
caractérisé en ce que
le tube d'aspiration arrière (19) entoure l'extrémité du tube d'aspiration avant (18) en laissant une ouverture formant l'entrée d'aspiration (191) du tube d'aspiration arrière (19).

7. Réservoir de carburant selon la revendication 1,
caractérisé en ce qu'
• il se présente sous la forme d'une selle avec au moins deux poches de selle (28, 29) reliées par une chambre de liaison (30), les deux poches formant deux chambres de réserve (11, 12),
• la chambre de prélèvement (13) se trouve dans l'une des poches (29),
• le dispositif de pompage de circulation (16'') est logé dans la poche de selle (29) comportant la chambre de prélèvement (13) et,
• le tube d'aspiration avant (19) tourné vers la buse (17) est relié à la buse (17) sans laisser d'intervalle et est raccordé par son entrée d'aspiration (191) à une conduite d'aspiration (32) débouchant au voisinage du fond dans l'autre poche de selle (28).

8. Réservoir de carburant selon la revendication 7,
caractérisé en ce que
l'entrée d'aspiration (191) du tube d'aspiration arrière (19) est concentrique à l'axe de tube (19).

9. Réservoir de carburant selon la revendication 7,
caractérisé en ce que
le tube d'aspiration arrière (19) est prévu à distance axiale du tube d'aspiration avant (18) ou entoure celui-ci à l'extrémité, en laissant une ouverture formant l'entrée d'aspiration (191) du tube d'aspiration arrière.

10. Réservoir de carburant selon l'une des revendications 7 à 9,
caractérisé en ce que
le tube d'aspiration arrière (19) traverse une cloison (22) séparant la chambre de prélèvement (13) de la chambre de réserve (12) qui l'entoure.
